# EUROPÄISCHE PATENTSCHRIFT

(11) **EP 2 286 921 B1**
(45) Veröffentlichungstag und Bekanntmachung des Hinweises auf die Patenterteilung: **09.05.2012**
(21) Anmeldenummer: 10011968.4
(22) Anmeldetag: 22.05.2007
(51) Int. Cl.: B01L 3/02, G01F 11/02

(54) **Verwendung einer elektrische Dosiervorrichtung zum Dosieren von Flüssigkeiten**
Use of an electronic metering device for metering liquids
Utilisation d'un dispositif de dosage électronique destiné au dosage de liquides

(30) Priorität: 14.07.2006 DE 102006032859
(43) Veröffentlichungstag der Anmeldung: 23.02.2011
(62) Teilanmeldung aus: 07010103.5
(73) Patentinhaber: Eppendorf AG, 22339 Hamburg (DE)
(72) Erfinder: Molitor, Peter, 24558 Henstedt-Ulzburg (DE); Andres, Karl-Friedrich, 22941 Bargteheide (DE); Schmidt, Peter, 23552 Lübeck (DE)
(74) Vertreter: Hauck Patent- und Rechtsanwälte

(56) Entgegenhaltungen:
- EP-A- 0 864 364
- EP-A2- 0 152 120
- WO-A-00/51739
- WO-A-2005/079988
- WO-A2-2005/052781
- DE-U1- 9 406 304
- BRANDT GMBH + CO KG: "Transferpette electronic", ANNOUNCEMENT BRAND, BRAND, WERTHEIM, DE, 7. Juli 2003 (2003-07-07), Seiten 1-33, XP002337207,

## Beschreibung

Die Erfindung bezieht sich auf die Verwendung einer elektronischen Dosiervorrichtung zum Dosieren von Flüssigkeiten.

Bekannte elektronische Dosiervorrichtungen zum Dosieren von Flüssigkeiten haben einen Antrieb mit einem Elektromotor bzw. eine elektronische Anzeigeeinrichtung und eine von dem Antrieb angetriebene Verdrängereinrichtung, die einen Zylinder mit einem darin verschieblich angeordneten Kolben umfasst. Die Verdrängereinrichtung ist mit einer austauschbaren Pipettenspitze kommunizierend verbindbar. Mittels der Verdrängereinrichtung wird ein Luftpolster verlagert, welches Flüssigkeit in die Pipettenspitze einsaugt bzw. daraus ausstößt. Pipettenspitzen sind bevorzugt Wegwerfartikel für Einmalgebrauch aus Kunststoff. Das Hubvolumen des Kolbens entspricht nicht exakt dem aufgenommenen und abgegebenen Flüssigkeitsvolumen. Dies beruht insbesondere darauf, daß sich die Luftsäule unter dem Gewicht der Flüssigkeit etwas längt, so daß das Hubvolumen das Flüssigkeitsvolumen übersteigt.

Aus der WO 2005/079988 A1 ist eine Pipette mit einer elektronischen Anzeige und einer Kalibrierfunktion bekannt. Die Kalibrierfunktion beinhaltet die Eingabe eines tatsächlich bei einer bestimmten Volumenanzeige pipettierten Volumens über eine Benutzerschnittstelle in das Steuersystem der Pipette.

Das Steuersystem errechnet Kalibrierdaten und speichert sie in einem Speicher. Mittels der Kalibrierdaten wird die Hublänge des Kolbens oder das von der Anzeigeeinrichtung angezeigte Volumen korrigiert, so daß das angezeigte Volumen dem tatsächlich dosierten Volumen besser entspricht Es ist möglich, verschiedene Kalibrierdaten im Steuersystem zu speichern, welche für verschiedene Pipettierfimktionen (auch "Betriebsarten" genannt) genutzt werden, so wie direktes Pipettieren ("direct pipetting") oder Umkehrpipettieren ("reverse pipetting"). Das direkte Pipettieren beinhaltet die direkte Aufnahme des gewünschten, abzugebenden Volumens, wogegen das Umkehrpipettieren die Aufnahme eines Volumens beinhaltet, das größer als das gewünschte, abzugebende Volumen ist, das anschließend abgegeben wird.

Bei der bekannten Pipette kann eine neue Kalibrierung erforderlich werden, wenn nicht eine der vorgesehenen Betriebsarten gewählt, sondern die Betriebsbedingungen geändert werden.

Somit sind in der bekannten Dosiervorrichtung ausschließlich eine Art von Kalibrierdaten gespeichert, die verschiedenen Pipetierfunktionen zugeordnet sind. Falls mit einem anderen Typ der Pipettenspitze oder mit einer Flüssigkeit anderer Art oder unter anderen Umgebungsbedingungen dosiert werden soll, müssen mit Hilfe gravimetrischer Messungen Kalibrierdaten für die abweichenden Betriebsbedingungen gewonnen werden. Hierdurch ist das Arbeiten mit der bekannten Kalibrierpipette aufwendig.

Die EP 0 864 364 A2 offenbart ein Verfahren zum Programmieren einer elektronischen Pipette, bei dem der Anwender die gewünschte Betriebsart und die Betriebsparameter eingibt, welche die Größe der Pipette, das zu dispensierende Volumen, die Anzahl der Ansaug- und Ausblasschritte und verschieden Zeitverzögerungen umfassen (Spalte 2, Zeile 51 bis 55). Mittels Scroll-Tasten kann der Benutzer durch Bereiche von Pipettengrößen, zudispensierende Volumen, Aufnahme- und Abgabegeschwindigkeit scrollen, um eine gewünschte Pipettengröße, ein gewünschtes Dosiervolumen oder eine Aufnahme- oder Abgabegeschwindigkeit auszuwählen (Spalte 4, Zeilen 12 - 17). Ein Rückgriff auf gespeicherte Kalibrierdaten ist jedoch nicht gegeben. Davon ausgehend liegt der Erfindung die Aufgabe zugrunde, eine Verwendung einer elektronischen Dosiervorrichtung zur Verfügung zu stellen, die die Anwendung der elektronischen Dosiervorrichtung unter verschiedenen Betriebsbedingungen weniger durch Kalibrierungen beeinträchtigt. Die Aufgabe wird durch die Verwendung einer elektronischen Dosiervorrichtung mit den Merkmalen des Anspruches 1 gelöst. Vorteilhafte Ausgestaltungen der Verwendung sind in den Unteransprüchen angegeben.

Die elektronische Dosiervorrichtung zum Dosieren von Flüssigkeiten hat
- einen Antrieb,
- mindestens eine Verdrängereinrichtung mit einer Verdrängerkammer und einem darin angeordneten Verdrängerelement, das mit dem Antrieb verbunden ist,
- mindestens eine Halteeinrichtung für eine Pipettenspitze, die einen Durchgangskanal aufweist, der mit der Verdrängerkammer verbunden ist,
- einen Datenspeicher mit Speicherplätzen für verschiedene Kalibrierdaten betreffend verschiedene Pipettenspitzen und/oder verschiedene Flüssigkeiten und/oder verschiedene Anwendungsbedingungen,
- eine elektrische Auswahleinrichtung zum Auswählen von Kalibrierdaten,
- eine elektrische Steuereinrichtung, die mit der elektrischen Auswahleinrichtung, dem Datenspeicher und mit einem elektrischen Antriebsmotor des Antriebs und/oder einer elektrischen Anzeigeeinrichtung verbunden ist, und die Bewegung des Verdrängerelementes mittels des Elektromotors und/oder die Anzeige des Dosiervolumens durch die Anzeigeeinrichtung unter Rückgriff auf die mit Hilfe der Auswahleinrichtung ausgewählten Kalibrierdaten aus dem Datenspeicher steuert, und
- eine elektrische Spannungsversorgung,
dadurch gekennzeichnet, dass
- mittels der elektrischen Auswahleinrichtung im Datenspeicher gespeicherte verschiedene Arten von Kalibrierdaten zur Anzeige auf der Anzeigeeinrichtung gebracht,
- Kalibrierdaten ausgewählt werden und
- mit den ausgewählten Kalibrierdaten mindestens eine Dosierung ausgeführt wird

Die erfindungsgemäße Verwendung einer Dosiervorrichtung ermöglicht eine einfache Kalibrierung durch Auswahl gespeicherter Kalibrierdaten betreffend verschiedene Pipettenspitzen und/oder verschiedene Flüssigkeiten und/oder verschiedene Anwendungsbedingungen. Hierdurch ist es möglich, unter verschiedenen Betriebsbedingungen aufgrund eines Austauschs der Pipettenspitze (z.B. mit einer anderen Geometrie aus einem anderen Material bzw. mit einer anderen Oberfläche) oder einer Dosierung einer anderen Flüssigkeit (z.B. mit einer anderen Dichte bzw. Viskosität) oder einer Änderung der Anwendungsbedingungen (z.B. verschiedene Umgebungsbedingungen wie Temperatur, Luftdruck, Luftfeuchtigkeit oder Pipettiertechniken wie unterschiedlich tiefes Eintauchen der Pipettenspitze in die Flüssigkeit oder unterschiedliches Ausrichten oder Bewegen der Pipette) nach Auswahl der den neuen Betriebsbedingungen entsprechenden Kalibrierdaten sogleich weiterzuarbeiten. Es ist nicht erforderlich, unmittelbar vorher eine Kalibrierung der Dosiervorrichtung unter den neuen Betriebsbedingungen durchzuführen. Dabei kann sich die Auswahl auf eine Art der genannten Kalibrierdaten beschränken oder mehrere verschiedene Arten oder sämtliche Arten der Kalibrierdaten umfassen.

Unter Rückgriff auf die ausgewählten Kalibrierdaten aus dem Datenspeicher steuert die Steuereinrichtung gemäß einer ersten Alternative den Antriebs-Alternativen steuert die Steuereinrichtung bei einer gegebenen Bewegung des Verdrängerelementes die Anzeige unter Rückgriff auf die Kalibrierdaten so, daß die Anzeige genau dem aufgenommenen bzw. abgegebenen Flüssigkeitsvolumen entspricht. Die zweite Alternative kann entweder eine Dosiervorrichtung mit einem Antrieb mit elektrischem Antriebsmotor oder eine Dosiervorrichtung mit einem manuell angetriebenen Antrieb sein. Bei einer manuell angetriebenen elektronischen Dosiervorrichtung weist der Antrieb ein Betetigungsorgan auf, das manuell zwischen zwei Anschlägen verlagerbar ist und dementsprechend das Verdrängerelement verlagert. Dabei kann mindestens ein Anschlag zum Einstellen des Dosiervolumens bzw. für eine Werkskalibrierung verlagerbar sein.

Die Erfindung betrifft sowohl stationär arbeitende Dosiervorrichtungen als auch manuelle Dosiervorrichtung, auch "Handdosiervorrichtungen" genannt.

Gemäß einer Ausgestaltung hat die Dosiervorrichtung mindestens eine Halteeinrichtung für eine Pipettenspitze, die einen Durchgangskanal aufweist, der mit der Verdrängerkammer verbunden ist.

Gemäß einer Ausgestaltung sind die Kalibrierdaten Kalibrierdaten für Pipettenspitzen verschiedener Geometrie (z.B. konisch, zylindrisch oder mit konischen und zylindrischen Abschnitten) und/oder aus verschiedenen Materialien (z.B. PE, PP oder PS) und/oder mit verschiedenen Oberflächen (z.B. Rauhigkeiten) und/oder Kalibrierdaten für verschiedene Flüssigkeiten (z.B. Ethanol, Propanol) und/oder für verschiedene Flüssigkeitstypen (z.B. Glycerin-, Proteinlösungen) und/oder Kalibrierdaten für mindestens eine Umgebungsbedingung (z.B. Temperatur, Luftdruck, Luftfeuchtigkeit) und/oder Kalibrierdaten für mindestens eine Anwendung (z.B. nicht benetzte Pipettenspitze oder vor dem Dosieren vorbenetzte Pipettenspitze) und/oder Kalibrierdaten für mindestens einen Anwender (z.B. Eintauchtiefe in Probenflüssigkeit, Ausrichtung der Pipette zur Vertikalen, Bewegung der Pipettenspitze) umfassen.

Gemäß einer Ausgestaltung ist umfaßt der Datenspeicher einen nicht-flüchtigen Datenspeicher (z.B. ein EEPROM), so daß Kalibrierdaten beim Abschalten der Spannungsversorgung nicht verlorengehen. Gemäß einer weiteren Ausgestaltung umfaßt der Datenspeicher fest eingespeicherte Kalibrierdaten. Es handelt sich hierbei um Kalibrierdatcn, die nicht gelöscht bzw. überschrieben werden dürfen. Dieses sind z.B. Kalibrierdaten, auf die häufig zurückgegriffen werden muß oder die sich während der Lebensdauer der Dosiervorrichtung nicht ändern (z.B. für bestimmte Pipettenspitzen, bestimmte Flüssigkeiten oder häufige Anwendungsbedingungen wie Normaltemperatur und Normaldruck). Dementsprechend ist der Datenspeicher z.B. ein Festspeicher (z.B. ROM) oder zumindest teilweise schreibgeschützt.

Die Kalibrierdaten können vor Anwendung der Dosiervorrichtung in den Datenspeicher eingebracht werden, so daß bei Anwendung grundsätzlich nur noch eine Auswahl der relevanten Kalibrierdaten getroffen werden muß. Gegebenenfalls können die Kalibrierdaten später aktualisiert bzw. ergänzt werden. Die Kalibrierdatcn können auf verschiedene Weise in den Datenspeicher eingespeichert werden. Es ist beispielsweise möglich, die Kalibrierdaten über geeignete Methoden zu ermitteln und über eine elektrische Eingabeeinrichtung, die mit der elektrischen Steuereinrichtung verbunden ist, in den Datenspeicher einzulesen. Die Kalibrierdaten können beispielsweise durch gravimetrische Messungen und Auswertung der Messungen ermittelt werden, die der Anwender gegebenenfalls unter Einsatz einer externen Datenverarbeitungsanlage mit einer geeigneten Software vornimmt. Auch ist es möglich, ausgehend von vorhandenen Kalibrierdaten weitere Kalibrierdaten zu errechnen, die für eine geänderte Geometrie der Pipettenspitzen und/oder Flüssigkeiten mit einer anderen Dichte und/oder eine andere Temperatur und/oder einen anderen Luftdruck und/oder eine andere Eintauchtiefe der Pipettenspitze und/oder eine andere Ausrichtung der Pipetten zur Vertikalen gelten. Die Berechnungsgrundlagen können insbesondere dem in der EP 0 562 358 B2 in den Abschnitten [0019] bis [0034] beschriebenen mathematischen Modell entnommen werden. Auch diese Berechnungen kann der Anwender gegebenenfalls unter Einsatz einer externen Datenverarbeitungsanlage mit einer geeigneten Software ausführen. Ferner ist es möglich, diese Berechnung der Kalibrierdaten mittels der Steuereinrichtung vorzunehmen, wobei die verschiedene Pipettenspitzen und/oder verschiedene Flüssigkeiten und/oder verschiedene Anwendungsbedingungen betreffenden Daten über eine elektrische Eingabeeinrichtung in die elektronische Dosiervorrichtung eingegeben werden.

Eine Ausgestaltung weist eine elektrische Eingabeeinrichtung zum Eingeben mindestens eines gravimetrisch ermittelten Volumens und/oder mindestens einer Dichte einer Flüssigkeit und mindestens einer gravimetrisch ermittelten Masse der Flüssigkeit auf, wobei die Steuereinrichtung aus dem gravimetrische ermittelten Volumen Kalibrierdaten errechnet und/oder aus der Dichte und der gravimetrisch ermittelten Masse ein gravimetrisches Volumen und daraus Kalibrierdaten errechnet und die Kalibrierdaten in den Datenspeicher einliegt. Bei dieser Ausgestaltung werden die Ergebnisse der gravimetrischen Messung in die Dosiervorrichtung eingegeben, in der die Kalibrierdaten errechnet werden. Ein aufwendiges Errechnen der Kalibrierdaten durch den Anwender entfällt. Die Ergebnisse der gravimetrischen Messung werden von der Dosicrvorrichtung in Kalibrierdaten umgerechnet und diese in dem Datenspeicher abgespeichert. Bei der Variante, die die Eingabe der Dichte und der Masse der Flüssigkeit ermöglicht, entfällt auch der Schritt der Volumenberechnung durch den Anwender.

Gemäß einer weiteren Ausgestaltung sind mittels der Eingabecinrichtung mehrere gravimetrische Meßwerte eingebbar, aus denen die Steuereinrichtung die Kalibrierdaten für eine Mchrpunktkalibrierung ermittelt, die sie in den Datenspeicher einliest. Eine Mehrpunktkalibrierung ermöglicht eine besonders genaue Messung über einen großen Bereich einstellbarer Dosiervolumina.

Die elektrische Auswahleinrichtung zum Auswählen von Kalibrierdaten ist z.B. in eine Dockingstation integriert, die die elektronische Dosiervorrichtung in Anwendungspausen aufnimmt. Die Dockingstation kann eine Ladeeinrichtung zum Aufladen von Akkus der elektrischen Spannungsversorgung der Dosiervorrichtung enthalten. Sie ermittelt die Umgebungsbedingungen (Temperatur, Luftdruck, Luftfeuchtigkeit) und gibt diese Daten über Kontakte oder drahtlos an die elektrische Steuereinrichtung weiter, die beim Betrieb der Dosiervorrichtung, wobei diese in der Dockingstation angeordnet oder dieser entnommen sein kann, auf die entsprechenden Kalibrierdaten zurückgreift. Gemäß einer anderen Ausgestaltung ist die Auswahleinrichtung in die Dosiervorrichtung so integriert, daß sie bei Benutzung der Dosiervorrichtung die jeweils verwendeten Pipettenspitzen und/oder Anwendungsbedingungen automatisch ermittelt und entsprechende Daten an die Steuereinrichtung liefert, die auf die korrespondierenden Kalibrierdaten zurückgreift. Die verwendete Pipettenspitze kann z.B. aufgrund einer daran angebrachten Codierung ermittelt werden, die von einer Leseeinrichtung der Dosiervorrichtung gelesen wird, wenn die Pipettenspitze in die Dosiervorrichtung eingesetzt ist. Die verwendete Flüssigkeit ist beispielsweise von einer Leseeinrichtung der Dosiervorrichtung durch Lesen einer Kennzeichnung (z.B. Barcode) von einer Vorratsflasche ermittelbar. Anwendungsbedingungen wie Temperatur, Luftdruck, Luftfeuchtigkeit, Eintauchtiefe der Pipettenspitze und Ausrichtung der Dosiervorrichtung zur Vertikalen sind mittels geeigneter Sensoren der Dosiervorrichtung ermittelbar.

Gemäß einer Ausgestaltung umfaßt die elektrische Auswahleinrichtung eine elektrische Eingabeeinrichtung zum Eingeben und/oder Auswählen von Kalibrierdaten betreffend verschiedene Pipettenspitzen und/oder verschiedene Flüssigkeiten und/oder verschiedene Anwendungsbedingungen. Aufgrund der eingegebenen bzw. ausgewählten Daten greift die Steuereinrichtung auf die zugeordneten Kalibrierdaten zurück. Gemäß einer Ausgestaltung ist die Eingabeeinrichtung eine elektrische Tastatur.

Gemäß einer weiteren Ausgestaltung weist die elektrische Eingabeeinrichtung mindestens zwei Tasten ("Modustaste" und "Parametertaste" genannt) auf, deren Betätigung auslöst, daß die Steuereinrichtung die Anzeige verschiedener Menüs durch die Anzeigeeinrichtung oder die Übernahme von angezeigten Eingaben steuert.

Gemäß einer weiteren Ausgestaltung hat die Eingabeeinrichtung ein Paar nebeneinander angeordneter elektrischer Steuertasten und steuert die elektrische Steuereinrichtung die Anzeige von Menüpunkten durch die Anzeigeeinrichtung sowie die Änderung von Parametern und deren Anzeige durch die Anzeigeeinrichtung entsprechend der Betätigung der Steuertasten. Gemäß einer weiteren Ausgestaltung steuert die elektrische Steuereinrichtung die Verlagerung des Verdrängerelementes durch den Elektromotor entsprechend der Betätigung der Steuertasten.

Die vorstehenden Ausgestaltungen der Eingabevorrichtung erleichtern die Bedienung der Dosiervorrichtung. Insbesondere ermöglichen sie eine einfache Auswahl von Kalibrierdaten und eine einfache Eingabe von Ergebnissen gravimetrischer Messungen.

Gemäß einer Ausgestaltung ermöglicht die Eingabeeinrichtung das Einstellen verschiedener Betriebsarten (z.B. Pipettieren, Dispensieren und Titrieren) und/oder das Einstellen von Dosierparametern (z.B. Dosiermenge, Dispensierschritte, Kolbengeschwindigkeit beim Ansaugen und Ausstoßen von Flüssigkeit) und/oder das Steuern der Bewegung des Verdrängungselementes.

Gemäß einer Ausgestaltung umfaßt die Eingabeeinrichtung einen drehbaren Einstellknopf zum Einstellen der Betriebsart der Dosiervorrichtung.

Gemäß einer Ausgestaltung umfaßt die elektrische Steuereinrichtung einen Mikroprozessor oder einen Mikrocontroller.

Die elektrische Spannungsversorgung versorgt die elektrischen Bauelement der Dosiervorrichtung mit Strom. Gemäß einer weiteren Ausgestaltung umfaßt die elektrische Spannungsversorgung ein Netzteil und/oder mindestens eine Batterie und/oder mindestens einen Akkumulator und/oder ein elektrisches Ladegerät zum Aufladen des Akkumulators.

Die Erfindung wird nachfolgend anhand der anliegenden Zeichnungen von Ausführungsbeispielen näher erläutert. In den Zeichnungen zeigen:
- Fig. 1: eine elektronische Dosiervorrichtung in einem perspektivischen Röntgenbild schräg von vorn und von der Seite;
- Fig. 2: dieselbe Dosiervorrichtung in einer Ansicht von der Seite;
- Fig. 3: dieselbe Dosiervorrichtung in derselben Perspektivansicht wie in Fig. 1, jedoch ohne Darstellung innen liegender Komponenten;
- Fig. 4: die Vorderseite des Gehäusekopfes der Dosiervorrichtung in verschiedenen Betriebssituationen in schematischer Draufsicht.
- Fig. 5: die Vorderseite des Gehäusekopfes einer Dosiervorrichtung ohne Einstellknopf in verschiedenen Betriebssituationen in schematischer Draufsicht.

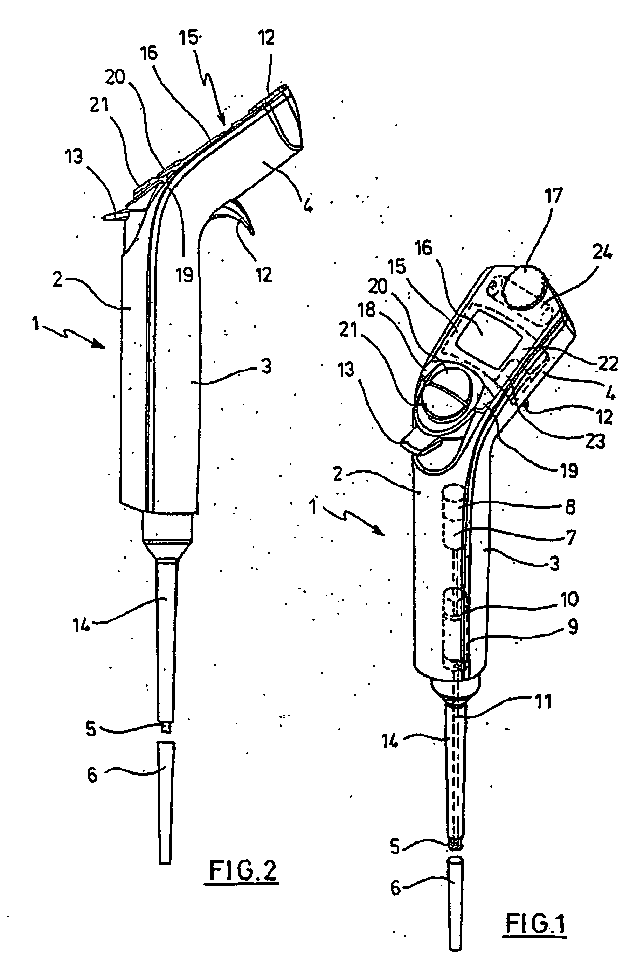

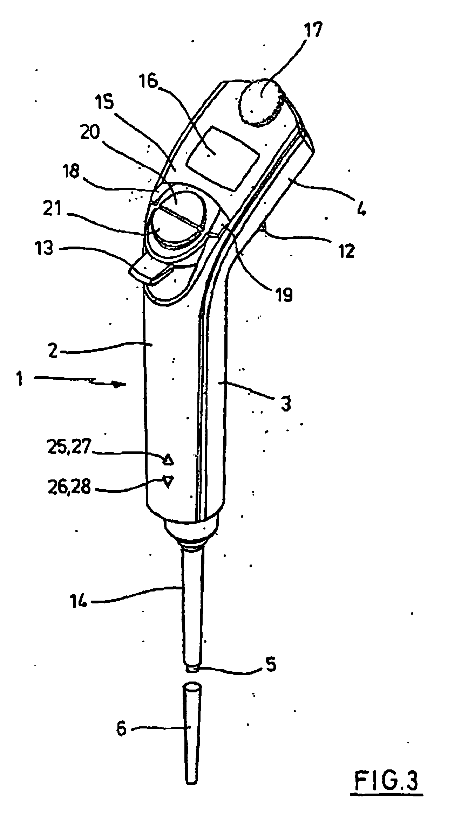

Gemäß Fig. 1 bis 3 hat eine Dosiervorrichtung 1 ein als Handgriff ausgeführtes Gehäuse 2 mit einem länglichen Gehäuseschaft 3 und einem um etwa 45° abgewinkelten Gehäusekopf 4 am oberen Ende. Das Gehäuse 2 hat am unteren Ende einen Konus 5 zum Aufstecken einer Pipettenspitze 6.

Im Gehäuseschaft 3 ist ein Antrieb 7 mit einem Elektromotor 8 angeordnet. Ferner befindet sich dort ein Zylinder 9 mit einem darin längsverschieblich angeordneten Kolben 10, der mit dem Antrieb 7 mechanisch verbunden ist. Der Zylinder 9 ist über einen Verbindungskanal 11 mit einer Öffnung am Ende des Konus 5 verbunden.

Der Gehäusekopf 4 hat an der Unterseite einen nach unten gekrümmten Haken 12, der das sichere Halten der Dosiervorrichtung 1 am Gehäusesehaft 3 erleichtert. Am oberen Ende des Gehäuseschaftes 3 ist eine Abwerfertaste 13 angeordnet, die mechanisch mit einer Abwerferhülse 14 verbunden ist, so daß durch Betätigen der Abwerfertaste 13 eine Pipettenspitze 6 vom Konus 5 abdrückbar ist.

Auf der Oberseite 15 bzw. Vorderseite des Gehäusekopfes 4 befindet sich eine Anzeigeeinrichtung 16 bzw. ein Display, die als LCD-Anzeige ausgeführt ist. Oberhalb der Anzeigeeinrichtung 16 ist ein drehbarer Einstellknopf 17 zum schnellen Einstellen der Betriebsart vorhanden.

Unterhalb der Anzeigeeinrichtung 16 sind seitlich zueinander versetzt eine Modustaste 18 und eine Parametertaste 19 angeordnet. Dazwischen befindet sich übereinander zwei Steuertasten 20, 21, wobei die obere Steuertaste 20 eine Aufwärtsbewegung und die untere Steuertaste 21 eine Abwärtsbewegung und einen Überblashub steuert.

Die Steuertaste 20 hat nur einen einzigen Schaltpunkt. Die Steuertaste 21 weist zwei Schaltpunkte auf, wobei das Erreichen des ersten Schaltpunktes die Abwärtsbewegung und das Erreichen des zweiten Schaltpunktes einen Überblashub des Kolbens 10 auslöst.

Im Gehäusekopf 4 ist auf einer Platine eine elektrische Steuereinrichtung 22 angeordnet, die mit dem Elektromotor 8, der Anzeigeeinrichtung 16, dem Einstellknopf 17 und den Tasten 18 bis 21 verbunden ist. Die elektrische Steuereinrichtung 22 umfaßt bevorzugt eine elektrische Datenverarbeitungseinrichtung, z.B. einen Mikrocomputer oder einen Mikrocontroller.

Ferner ist ein Datenspeicher 23 vorhanden, der mindestens ein separates Bauteil ist oder in den Mikrocontroller integriert ist.

Ferner ist im Gehäusekopf 4 eine elektrische Spannungsversorgung 24 vorhanden, die beispielsweise von mehreren Akkus gebildet ist, die mittels eines externen Ladegeräts aufladbar sind. Die elektrische Spannungsversorgung 24 versorgt die elektrischen Bauelemente der Dosiervorrichtung 1 mit Strom.

Die elektronische Dosiervorrichtung 1 ist aus einem Standby-Modus, in den sie nach einer bestimmten Ruhezeit fällt, durch Betätigen einer beliebigen Taste 18 bis 21 in den normalen Betriebszustand versetzbar. Zusätzlich oder statt dessen kann ein nicht gezeigter Ein-/Ausschalter zum Einschalten des normalen Betriebszustandes bzw. Ausschalten vorhanden sein.

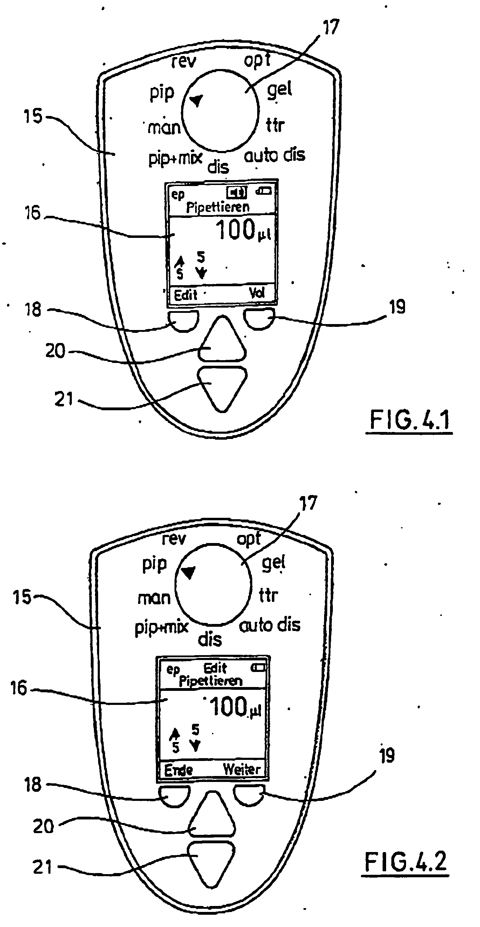

Nach dem Einschalten zeigt die Anzeigeeinrichtung ein Untermenü mit der eingestellten Betriebsart und den zuletzt eingestellten Dosierparametern dieser Betriebsart an. In Fig. 4.1 ist dies für den Fall gezeigt, daß mittels des Einstellknopfes 17 die Betriebsart Pipettieren ("pip") eingestellt ist.

Nach Betätigen der Modustaste 18 ist es möglich, Dosierparameter dieser Betriebsart zu ändern. In Fig. 4.2 ist die Anzeigeeinrichtung 16 nach Betätigung der Modustaste 18 gezeigt. Der veränderbare Dosierparameter (hier das Dosiervolumen 100 µl) ist grafisch (z.B. farblich) hervorgehoben, hier durch einen helleren Grauton.

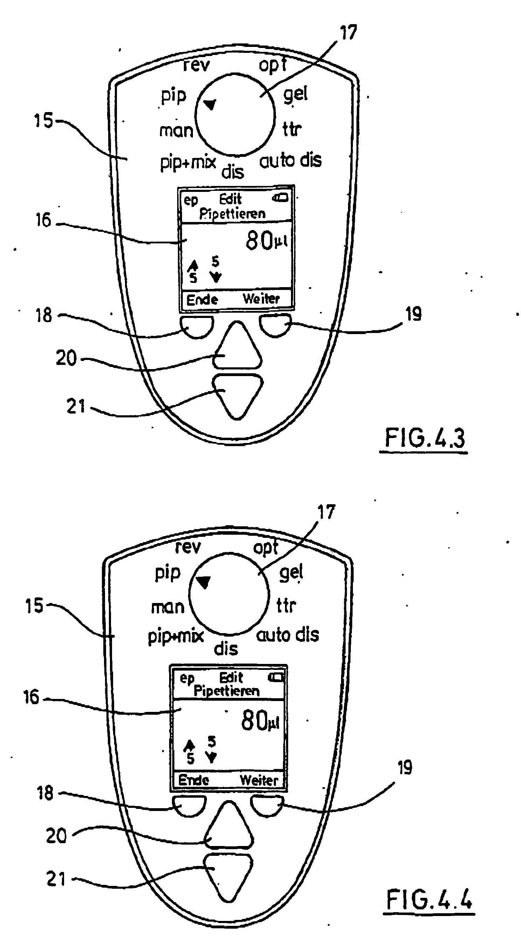

Durch Betätigen der Steuertasten 20, 21 kann danach der Wert des Dosierparameters erhöht bzw. gesenkt werden. In Fig. 4.3 ist dies für eine Reduzierung des Dosiervolumens (auf 80 µl) gezeigt.

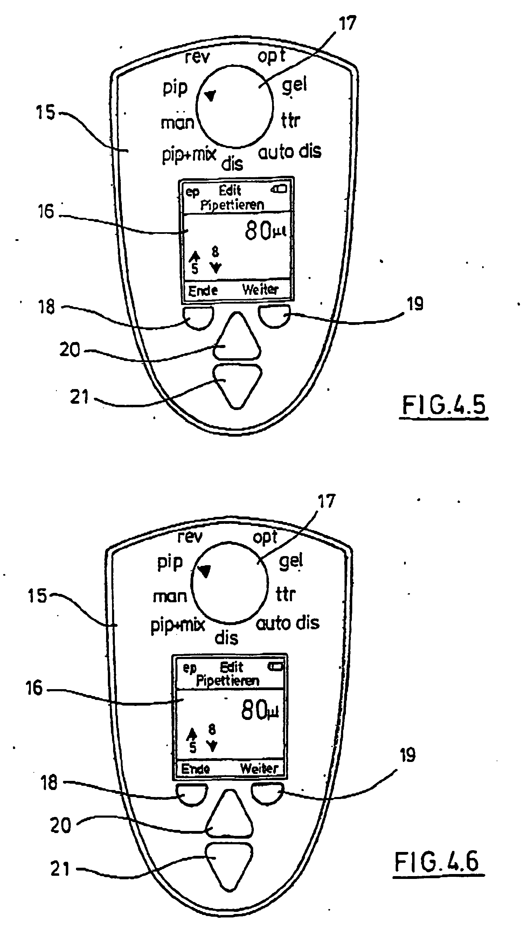

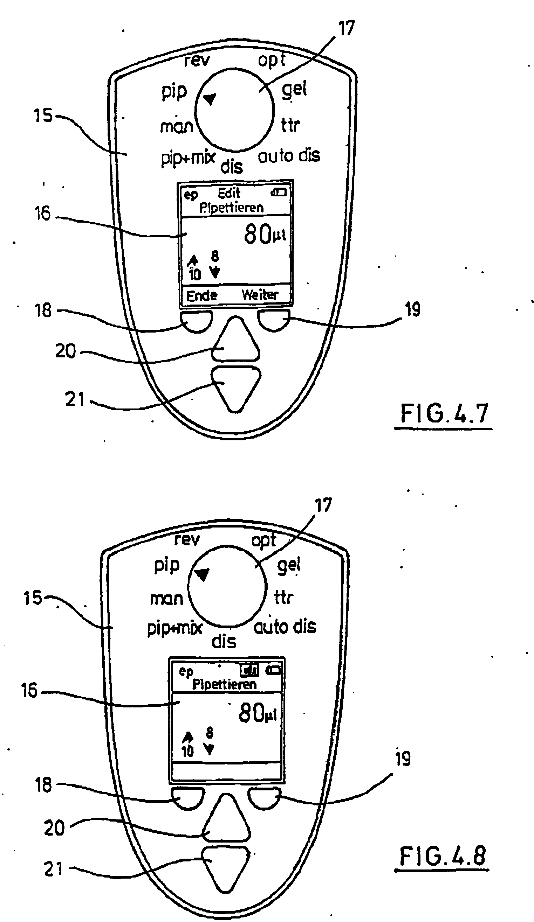

Durch Betätigen der Parametertaste 19 wird der eingestellte Dosierparameter übernommen und auf einen anderen änderbaren Dosierparameter umgeschaltet, den die Anzeigeeirichtung 16 grafisch hervorgehoben anzeigt (Fig. 4.4). Hier ist dies die Kolbengeschwindigkeit beim Ausstoßen von Flüssigkeit (5 mm/s). Dieser Dosierparameter kann dann mit Hilfe der Steuertasten 20, 21 geändert werden, im Beispiel auf 8 mm/s (Fig. 4.5). Danach kann durch erneutes Betätigen der Parametertaste 19 die Änderung übernommen und auf die Kolbengeschwindigkeit beim Einsaugen umgeschaltet werden, die grafisch hervorgehoben angezeigt wird (Fig. 4.6). Dieser Dosierparameter kann mittels der Steuertasten 20, 21 geändert werden, hier auf 10 mm/s (Fig. 4.7).

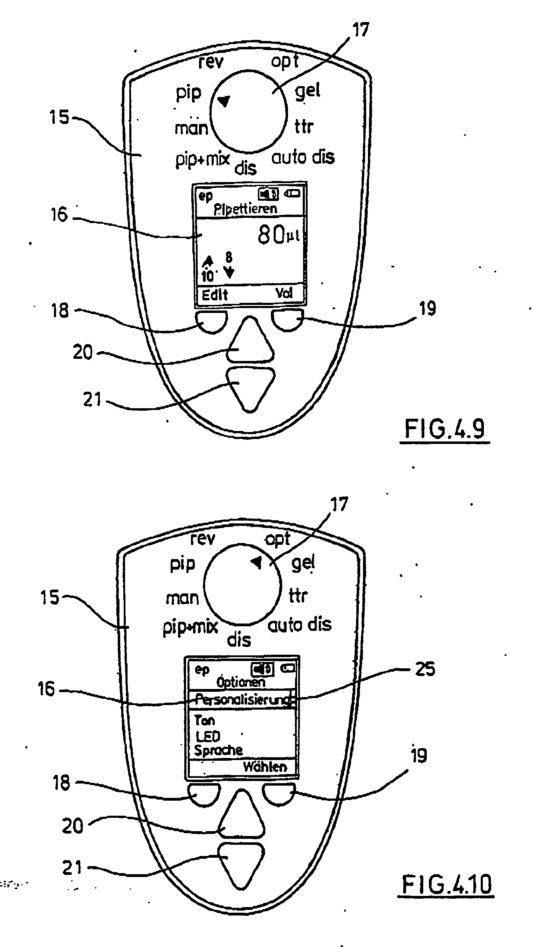

Durch Betätigen der Modustaste 18 ist es möglich, die letzte Änderung zu übernehmen und vom Editiermodus in den Pipettiermodus zurückzuschalten. Danach kann durch Betätigen der Steuertaste 20 ein Volumen von 80 µl Flüssigkeit in die Pipettenspitze aufgenommen (Fig. 4.8) und durch Betätigen der Steuertaste 21 abgegeben werden (Fig. 4.9).

Durch Drehen des Einstellknopfes 17 gelangt man zu anderen Betriebsarten, z.B. manuelles Pipettieren ("man"), Pipettieren und Mixen ("pip und mix"), Dispensieren ("dis"), automatisches Dispensieren ("auto dis"), Titrieren ("ttr"), Gelbeladen ("gel") und Umkehrpipettieren ("rev").

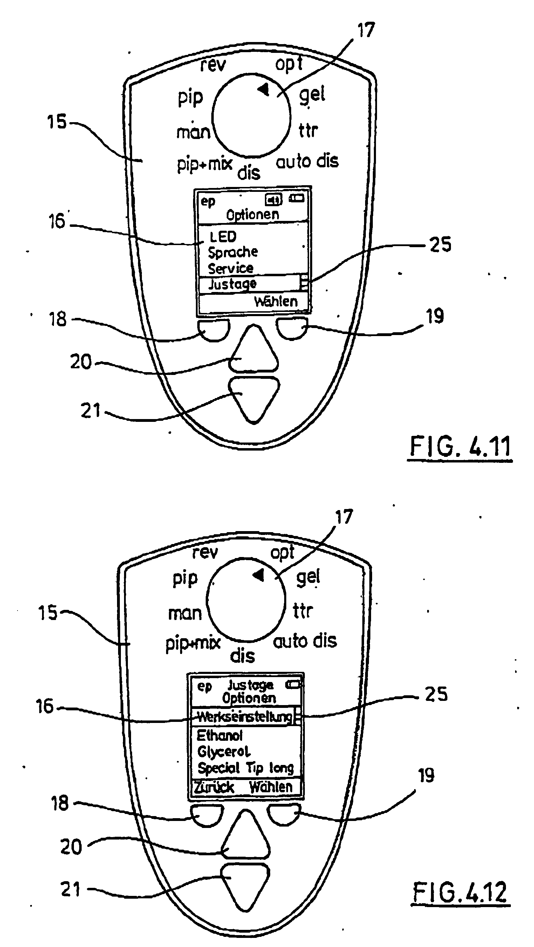

Durch Einstellen des Einstellknopfes 17 auf die Position Optionen ("opt") wird ein Untermenü auf der Anzeigeeinrichtung 16 aufgerufen (Fig. 4.10), von dem durch Bestätigung der Steuertasten 20, 21 verschiedene Menüpunkte angesteuert werden können, auf die ein Zeiger 25 weist (Fig. 4.11). Durch Betätigen der Parameterstaste 19 kann ein einzelner Menüpunkt ausgewählt werden.

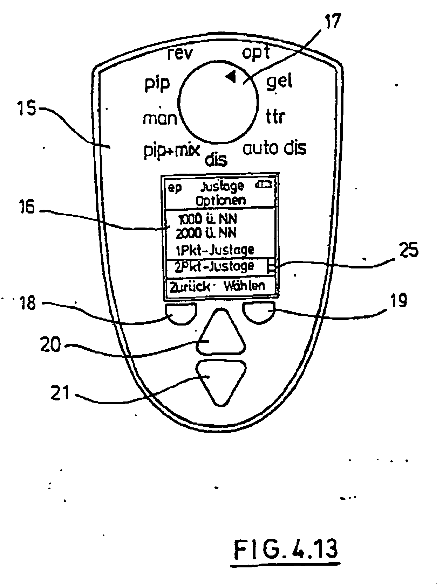

Wenn der Menüpunkt "Justage" ausgewählt ist, erscheint ein Untermenü, das die Auswahl bzw. Eingabe verschiedener Kalibrierparameter betrifft (Fig. 4.12). Durch Betätigen der Steuertasten 20, 21 können bestimmte Menüpunkte angesteuert und durch Betätigen der Parametertaste 19 gewählt werden (Fig. 4.13). Auf diese Weise können beispielsweise die Kalibrierparameter der Werkseinstellung, für Ethanol oder Glycerol oder für eine besonders lange Pipettenspitze ("Special Tip long") ausgewählt werden (Fig. 4.12). Auch ist es möglich, die Kalibrierparameter für bestimmte geografische Höhen auszuwählen, auf denen die Pipette verwendet wird (Fig. 4.13).

Des weiteren können nach Auswahl der betreffenden Menüpunkte die gravimetrischen Werte für eine Einpunkt-, Zweipunkt- oder Dreipunktjustage eingegeben werden (Fig. 4.13).

Der Anwender gelangt durch Drehen des Einstellknopfes 17 zu dem Menü, in dem die gewählte Betriebsart mit den geltenden Dosierparametern angezeigt wird (z.B. Fig. 4.9).

Danach kann er in der gewählten Betriebsart dosieren, wobei die Steuereinrichtung auf die ausgewählten Kalibrierdaten zurückgreift, die im Datenspeicher 23 gespeichert sind. Die in der Betriebsart geltenden Dosierparameter können ggfs. in der oben beschriebenen Weise geändert werden.

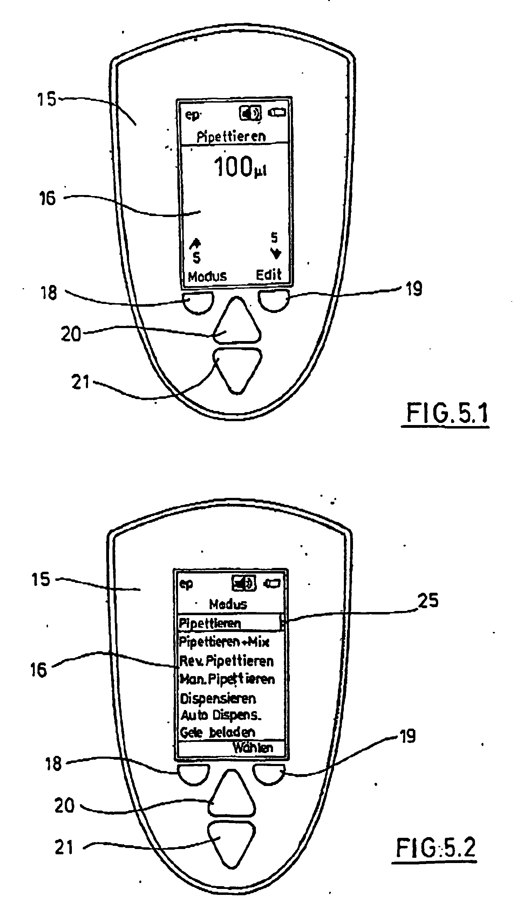

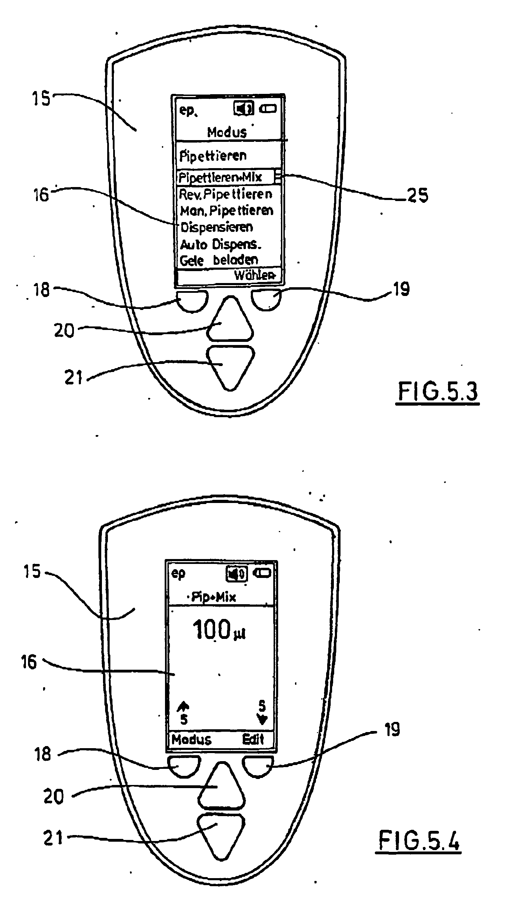

Fig. 5 zeigt die Oberseite 15 des Gehäusekopfes 4 einer weiteren Dosiervorrichtung, die kein Einstellrad 17 aufweist. Die Betriebsweisen dieser Dosiervorrichtung werden über das von der Anzeigeeinrichtung 16 angezeigte Menü und die Tasten 18 bis 21 ausgewählt.

Hierzu wird ausgehend von der automatisch erscheinenden Anzeige für die zuletzt gewählte Betriebsart mit den zuletzt eingestellten Dosietparametern (5.1) die Modustaste 18 gedrückt, worauf ein Menü mit den wählbaren Betriebsarten angezeigt wird (Fig. 5.2). Mittels der Steuertasten. 20, 21 wird der Zeiger 25 auf eine gewünschte Betriebsart gesetzt (Fig. 5.3). Zur Bestätigung der Betriebsart wird die Parametertaste 19 gedrückt, worauf die gewählte Betriebsart mit den zuletzt eingestellten Dosierparametern angezeigt wird (Fig. 5.4).

Im Übrigen erfolgt die Bedienung wie bei dem zuvor beschriebenen Ausführungsbeispiel von Fig. 1 bis 4 mit einem Einstellrad zum Einstellen der Betriebsart. Insbesondere die Dosierparameter, die Durchführung von Dosiervorgängen in gewählten Betriebsarten, die Auswahl von Kalibrierdaten sowie die Eingabe der Ergebnisse gravimetrischer Messungen erfolgt wie bei dem zuvor beschriebenen Ausführungsbeispiel.

## Patentansprüche

1. Verwendung einer elektronischen Dosiervorrichtung zum Dosieren von Flüssigkeiten mit
- einem Antrieb (7, 8),
- mindestens einer Verdrängereinrichtung (9, 10) mit einer Verdrängerkammer (9) und einem darin angeordneten Verdrängerelement (10), das mit dem Antrieb (7, 8) verbunden ist,
- einem Datenspeicher (23) mit Speicherplätzen für verschiedene Kalibrierdaten betreffend verschiedene Pipettenspitzen (6) und/oder verschiedene Flüssigkeiten und/oder verschiedene Anwendungsbedingungen,
- einer elektrischen Auswahleinrichtung (18, 19, 20, 21) zum Auswählen von Kalibrierdaten,
- einer elektrischen Steuereinrichtung (22), die mit der elektrischen Auswahleinrichtung (18, 19, 20, 21), dem Datenspeicher (23) und mit dem elektrischen Antriebsmotor (8) des Antriebs (7, 8) und/oder einer elektrischen Anzeigeeinrichtung (16) verbunden ist, und die Bewegung des Verdrängerelementes (10) mittels des Elektromotors (8) und/oder die Anzeige des Dosiervolumens durch die Anzeigeeinrichtung (16) unter Rückgriff auf die mit Hilfe der Auswahleinrichtung (18, 19, 20, 21) ausgewählten Kalibrierdaten aus dem Datenspeicher (23) steuert, und
- eine elektrische Spannungsversorgung (24)
**dadurch gekennzeichnet, dass**
- mittels der elektrischen Auswahleinrichtung (18, 19, 20, 21) im Datenspeicher (23) gespeicherte verschiedene Arten von Kalibrierdaten zur Anzeige auf der Anzeigeeinrichtung (16) gebracht und Kalibrierdaten ausgewählt werden und
mit den ausgewählten Kalibrierdaten mindestens eine Dosierung ausgeführt wird.

2. Verwendung einer Dosiervorrichtung nach Anspruch 1, die eine Handdosiervorrichtung ist.

3. Verwendung einer Dosiervorrichtung nach Anspruch 1 oder 2, bei der die Arten von Kalibrierdaten mehrere Kalibrierdaten aus Kalibrierdaten für Pipettenspitzen (6) verschiedener Geometrie und/oder aus verschiedenen Materialien und/oder mit verschiedenen Oberflächen und/oder Kalibrierdaten für verschiedene Flüssigkeiten und/oder für verschiedene Flüssigkeitstypen und/oder Kalibrierdaten für mindestens eine Umgebungsbedingung und/oder Kalibrierdaten für mindestens eine Anwendung und/oder Kalibrierdaten für mindestens einen Anwender umfaßt.

4. Verwendung einer Dosiervorrichtung nach einem der Ansprüche 1 bis 3, bei der der Datenspeicher (23) einen nicht-flüchtigen Datenspeicher umfaßt.

5. Verwendung einer Dosiervorrichtung nach einem der Ansprüche I bis 4, bei der der Datenspeicher (23) fest eingespeicherte Kalibrierdaten umfaßt.

6. Verwendung einer Dosiervorrichtung nach einem der Ansprüche 1 bis 5, die eine elektrische Eingabeeinrichtung (18, 19, 20, 21) zum Eingeben mindestens eines gravimetrisch ermittelten Volumens und/oder mindestens einer Dichte einer Flüssigkeit und mindestens einer gravimetrisch ermittelten Masse der Flüssigkeit aufweist, wobei die Steuereinrichtung (22) aus dem gravimetrisch ermittelten Volumen Kalibrierdaten errechnet und/oder aus der Dichte und der gravimetrisch ermittelten Masse ein gravimetrisches Volumen und daraus Kalibrierdaten errechnet und die Kalibrierdaten in den Datenspeicher (23) einliest.

7. Verwendung einer Dosiervorrichtung nach Anspruch 6, bei der mittels der Eingabeeinrichtung (18, 19, 20, 21) mehrere gravimetrische Meßwerte eingebbar sind, aus denen die Steuereinrichtung (22) die Kalibrierdaten für eine Mehrpunktkalibrierung ermittelt, die sie in den Datenspeicher (23) einliest.

8. Verwendung einer Dosiervorrichtung nach einem der Ansprüche 1 bis 7, bei der die elektrische Auswahleinrichtung (18, 19, 20, 21) eine elektrische Eingabeeinrichtung zum Eingeben und/oder Auswählen von Kalibrierdaten betreffend verschiedene Pipettenspitzen (6) und/oder verschiedene Flüssigkeiten und/oder verschiedene Anwendungsbedingungen umfaßt.

9. Verwendung einer Dosiervorrichtung nach einem der Ansprüche 6 bis 8, bei der die elektrische Eingabeeinrichtung (18, 19, 20, 21) mindestens eine Modustaste (18) und eine Parametertaste (19) umfaßt, deren Betätigung auslöst, daß die Steuereinrichtung (22) die Anzeige verschiedener Menüs durch die Anzeigeeinrichtung (16) oder die Übernahme von angezeigten Eingaben steuert.

10. Verwendung einer Dosiervorrichtung nach einem der Ansprüche 6 bis 9, bei der die Eingabeeinrichtung (18, 19, 20, 21) ein Paar nebeneinander angeordneter elektrischer Steuertasten (20, 21) hat und die elektrische Steuereinrichtung (22) die Anzeige von Menüpunkten durch die Anzeigeeinrichtung (16) sowie die Änderung von Parametern und deren Anzeige durch die Anzeigeeinrichtung (16) entsprechend der Betätigung der Steuertasten (20, 21) steuert.

11. Verwendung einer Dosiervorrichtung nach Anspruch 10, bei der die elektrische Steuereinrichtung (22) die Verlagerung des Verdräggerelementes (10) durch den Elektromotor (8) entsprechend der Betätigung der Steuertasten (20, 21) steuert.

12. Verwendung einer Dosiervorrichtung nach einem der Ansprüche 6 bis 11, bei der die Eingabeeinrichtung (18, 19, 20, 21) das Einstellen verschiedener Betriebsarten und/oder das Einstellen von Dosierparametern und/oder das Steuern der Bewegung des Verdrängerelementes (10) ermöglicht.

13. Verwendung einer Dosiervorrichtung nach einem der Ansprüche 6 bis 12, bei der die Eingabeeinrichtung einen drehbaren Einstellknopf (17) zum Einstellen der Betriebsart der Dosiervorrichtung umfaßt.

14. Verwendung einer Dosiervorrichtung nach einem der Ansprüche 1 bis 13, bei der die elektrische Steuereinrichtung (22) einen Mikroprozessor oder einen Mikrocontroller umfaßt.

15. Verwendung einer Dosiervorrichtung nach einem der Ansprüche 1 bis 14, bei der die elektrische Spannungsversorgung (24) ein Netzteil und/oder mindestens eine Batterie und/oder mindestens einen Akkumulator und/oder ein elektrisches Ladegerät zum Aufladen des Akkumulator umfaßt.

## Claims

1. Use of an electronic metering apparatus for metering liquids with
• a drive (7, 8),
• at least one displacer device (9, 10) with a displacer chamber (9) and a displacer element (10) arranged therein, which is connected to the drive (7,8),
• a data memory (23) with memory locations for different calibration data concerning different pipette points (6) and/or different liquids and/or different usage conditions,
• an electric selection device (18, 19, 20, 21) for selecting calibration data,
• an electric control unit (22), which is connected to the electric selection device (18, 19, 20, 21), the data memory (23), and to the electric drive motor (8) of the drive (7, 8) and/or to an electric display device (16), and which controls the movement of the displacer element (10) by means of the electric motor (8) and/or the display of the metering volume through the display device (16) making recourse to the calibration data from the data memory (23), selected with the aid of the selection device (18, 19, 20, 21), and
• an electric power supply (24), **characterised in that**,
• different kinds of calibration data saved in the data memory (23) are displayed on the electric display device (16) by means of the electric selection device (18, 19, 20, 21) and calibration data are selected and at least one metering process is carried out.

2. Use of a metering apparatus according to claim 1, which is a handheld metering apparatus.

3. Use of a metering apparatus according to claim I or 2, wherein the kinds of calibration data comprise several calibration data from calibration data for pipette points (6) of different geometry and/or from different materials and/or with different surfaces and/or calibration data for different liquids and/or for different types of liquids and/or calibration data for at least one environmental condition and/or calibration data for at least one application and/or calibration data for at least one user.

4. Use of a metering apparatus according to any one of claims 1 to 3, wherein the data memory (23) comprises a non-volatile data memory.

5. Use of a metering apparatus according to any one of claims 1 to 4, wherein the data memory (23) comprises permanently memorised calibration data.

6. Use of a metering apparatus according to any one of claims I to 5, which has an electric input device (18, 19, 20, 21) for putting in at least one gravimetrically determined volume and/or at least one density of a liquid and at least one gravimetrically determined mass of the liquid, wherein the control unit (22) calculates calibration data from the gravimetrically determined volume and/or calculates a gravimetric volume from the density and the gravimetrically determined mass and calibrates calibration data therefrom, and writes the calibration data into the data memory (23).

7. Use of a metering apparatus according to claim 6, wherein plural gravimetric measurement values can be input by means of the input device (18, 19, 20, 21), from which the control unit (22) determines the calibration data for a multipoint calibration, which it writes into the data memory (23).

8. Use of a metering apparatus according to any one of claims 1 to 7, wherein the electric selection device (18, 19, 20, 21) comprises an electric input device for putting in and/or selecting calibration data concerning different pipette points (6) and/or different liquids and/or different application conditions.

9. Use of a metering apparatus according to any one of claims 6 to 8, wherein the electric input device (18, 19, 20, 21) comprises at least one mode key (18) and a parameter key (19), the actuation of which triggers that the control unit (22) controls the display of different menus by the display device (16) or the entry of displayed inputs.

10. Use of a metering apparatus according to any one of claims 6 to 9, wherein the input device (18, 19, 20, 21) has a pair of electric control keys (20, 21) disposed next to each other, and the electric control unit (22) controls the display of menu items by the display device (16) as well as the change of parameters and the display thereof by the display device (16), corresponding to the actuation of the control keys (20, 21).

11. Use of a metering apparatus according to claim 10, wherein the electric control unit (22) controls the dislocation of the displacer clement (10) by the electric motor (8), corresponding to the actuation of the control keys (20, 21).

12. Use of a metering apparatus according to any one of claims 6 to 11, wherein the input device (18, 19, 20, 21) permits the setting of different modes of operation and/or the setting of metering parameters and/or the control of the movement of the displacer element (10).

13. Use of a metering apparatus according to any one of claims 6 to 12, wherein the input device comprises a turnable setting button (17) for setting the mode of operation of the metering apparatus.

14. Use of a metering apparatus according to any one of claims 1 to 13, wherein the electric control unit (22) comprises a microprocessor or a microcontroller.

15. Use of a metering apparatus according to any one of claims 1 to 14, wherein the electric power supply (24) comprises a mains power pack and/or at least one battery and/or at least one accumulator and/or an electric charger for charging the accumulator.

## Revendications

1. Utilisation d'un dispositif de dosage électronique pour le dosage de liquides, avec
- un entraînement (7, 8),
- au moins un équipement de refoulement (9, 10) avec une chambre de refoulement (9) et un élément de refoulement (10) qui y est disposé et qui est raccordé à l'entraînement (7, 8),
- une mémoire de données (23) avec des emplacements de mémoire pour différentes données d'étalonnage concernant différentes pointes de pipette (6) et/ou différents liquides et/ou différentes conditions d'utilisation,
- un équipement de sélection (18, 19, 20, 21) électrique pour la sélection de données d'étalonnage,
- un équipement de commande (22) électrique qui est raccordé à l'équipement de sélection (18, 19, 20, 21) électrique, à la mémoire de données (23) et au moteur d'entraînement (8) électrique de l'entraînement (7, 8) et/ou à un équipement d'affichage (16) électrique, et qui commande le mouvement de l'élément de refoulement (10) au moyen du moteur électrique (8), et/ou l'affichage du volume de dosage par l'équipement d'affichage (16) avec reprise des données d'étalonnage issues de la mémoire de données (23) qui sont sélectionnées à l'aide de l'équipement de sélection (18, 19, 20, 21), et
- une alimentation en tension électrique (24)
**caractérisée en ce que**
- au moyen de l'équipement de sélection (18, 19, 20, 21) électrique, différents types de données d'étalonnage enregistrées dans la mémoire de données (23) sont conduites à être affichées sur l'équipement d'affichage (16), et des données d'étalonnage sont sélectionnées, et
au moins un dosage est effectué avec les données d'étalonnage sélectionnées.

2. Utilisation d'un dispositif de dosage selon la revendication 1, qui est un dispositif de dosage manuel.

3. Utilisation d'un dispositif de dosage selon la revendication 1 ou la revendication 2, dans laquelle les types de données d'étalonnage comprennent plusieurs données d'étalonnage parmi des données d'étalonnage pour des pointes de pipette (6) de différentes géométries et/ou en différents matériaux et/ou avec différentes surfaces, et/ou des données d'étalonnage pour différents liquides et/ou pour différents types de liquides, et/ou des données d'étalonnage pour au moins une condition ambiante, et/ou des données d'étalonnage pour au moins une utilisation, et/ou des données d'étalonnage pour au moins un utilisateur.

4. Utilisation d'un dispositif de dosage selon une des revendications 1 à 3, dans laquelle la mémoire de données (23) comprend une mémoire de données non volatile.

5. Utilisation d'un dispositif de dosage selon une des revendications 1 à 4, dans laquelle la mémoire de données (23) comprend des données d'étalonnage enregistrées de façon fixe.

6. Utilisation d'un dispositif de dosage selon une des revendications 1 à 5, qui présente un équipement d'entrée (18, 19, 20, 21) électrique pour l'entrée d'au moins un volume déterminé par gravimétrie et/ou d'au moins une densité d'un liquide et d'au moins une masse du liquide déterminée par gravimétrie, l'équipement de commande (22) calculant des données d'étalonnage à partir du volume déterminé par gravimétrie, et/ou calculant, à partir de la densité et de la masse déterminée par gravimétrie, un volume gravimétrique et, partant de là, des données d'étalonnage, et entrant les données d'étalonnage dans la mémoire de données (23).

7. Utilisation d'un dispositif de dosage selon la revendication 6, dans laquelle, au moyen de l'équipement d'entrée (18, 19, 20, 21), il est possible d'entrer plusieurs valeurs de mesure gravimétriques à partir desquelles l'équipement de commande (22) détermine les données d'étalonnage pour un étalonnage multipoint qu'il introduit dans la mémoire de données (23).

8. Utilisation d'un dispositif de dosage selon une des revendications 1 à 7, dans laquelle l'équipement de sélection (18, 19, 20, 21) électrique comprend un équipement d'entrée électrique pour l'entrée et/ou la sélection de données d'étalonnage concernant différentes pointes de pipette (6) et/ou différents liquides et/ou différentes conditions d'utilisation.

9. Utilisation d'un dispositif de dosage selon une des revendications 6 à 8, dans laquelle l'équipement d'entrée (18, 19, 20, 21) électrique comprend au moins une touche de mode (18) et une touche de paramètre (19) dont l'actionnement fait que l'équipement de commande (22) commande l'affichage de différents menus par l'équipement d'affichage (16) ou la prise en charge d'entrées affichées.

10. Utilisation d'un dispositif de dosage selon une des revendications 6 à 9, dans laquelle l'équipement d'entrée (18, 19, 20, 21) a une paire de touches de commande (20, 21) électriques juxtaposées, et l'équipement de commande (22) électrique commande l'affichage de points de menu par l'équipement d'affichage (16) ainsi que la modification de paramètres et leur affichage par l'équipement d'affichage (16) en fonction de l'actionnement des touches de commande (20, 21).

11. Utilisation d'un dispositif de dosage selon la revendication 10, dans laquelle l'équipement de commande (22) électrique commande le déplacement de l'élément de refoulement (10) par le moteur électrique (8) en fonction de l'actionnement des touches de commande (20, 21).

12. Utilisation d'un dispositif de dosage selon une des revendications 6 à 11, dans laquelle l'équipement d'entrée (18, 19, 20, 21) permet le réglage de différents modes de fonctionnement et/ou le réglage de paramètres de dosage et/ou la commande du mouvement de l'élément de refoulement (10).

13. Utilisation d'un dispositif de dosage selon une des revendications 6 à 12, dans laquelle l'équipement d'entrée comprend un bouton de réglage (17) rotatif pour le réglage du mode de fonctionnement du dispositif de dosage.

14. Utilisation d'un dispositif de dosage selon une des revendications 1 à 13, dans laquelle l'équipement de commande (22) électrique comprend un microprocesseur et un microcontrôleur.

15. Utilisation d'un dispositif de dosage selon une des revendications 1 à 14, dans laquelle l'alimentation en tension électrique (24) comprend un bloc d'alimentation et/ou au moins une batterie et/ou au moins un accumulateur et/ou un chargeur électrique pour le chargement de l'accumulateur.
